# EUROPÄISCHE PATENTSCHRIFT

(11) **EP 2 610 514 B1**
(45) Veröffentlichungstag und Bekanntmachung des Hinweises auf die Patenterteilung: **21.01.2015**
(21) Anmeldenummer: 12199427.1
(22) Anmeldetag: 27.12.2012
(51) Int. Cl.: F16C 33/80, F16C 35/06, F16C 35/07, F16J 15/447, H02K 5/16

(54) **Elektrische Maschine**
Electric machine
Machine électrique

(30) Priorität: 30.12.2011 AT 19062011
(43) Veröffentlichungstag der Anmeldung: 03.07.2013
(73) Patentinhaber: Traktionssysteme Austria GmbH, 2351 Wiener Neudorf (AT)
(72) Erfinder: Zach, Michael, 1160 Wien (AT); Leisser, Roman, 1120 Wien (AT); Leser, Stefan, 7311 Neckenmarkt (AT); Toth, Oliver, 9400 Sopron (HU); Neudorfer, Harald, 2514 Traiskirchen (AT)
(74) Vertreter: Sonn & Partner Patentanwälte

(56) Entgegenhaltungen:
- DE-A1-102006 040 611
- JP-A- 2003 172 458

## Beschreibung

Die Erfindung betrifft eine elektrische Maschine, insbesondere permanentmagneterregte elektrische Maschine, mit einem Rotor mit einer Rotorwelle, einem Stator, und seitlich angeordneten Lagerschilden mit jeweils einem zwischen Rotor und Stator angeordneten Lager, wobei jeweils eine Labyrinthdichtung mit jeweils einem mit dem Rotor verbundenen drehenden Labyrinthring mit Formelementen und einem mit dem Stator verbundenen feststehenden Labyrinthring mit zu den Formelementen des drehenden Labyrinthrings korrespondierend ausgebildeten Formelementen vorgesehen ist.

Die gegenständliche Erfindung ist sowohl auf elektrische Maschinen im Motorbetrieb, als auch auf elektrische Maschinen im Generatorbetrieb anwendbar. Prinzipiell ist die gegenständliche Erfindung bei beliebigen elektrischen Maschinen anwendbar. Die Vorteile sind jedoch bei permanentmagneterregten elektrischen Maschinen, bei welchen aufgrund der Permanentmagnete hohe magnetische Kräfte auftreten, besonders groß.

Die elektrischen Maschinen können fremd-ventiliert als auch eigenventiliert ausgebildet sein. Bei eigen-ventilierten elektrischen Maschinen ist zumindest ein Ventilator drehfest mit dem Rotor bzw. der Rotorwelle verbunden.

Die Lager von elektrischen Maschinen werden stark beansprucht und müssen regelmäßig gewartet bzw. ausgetauscht werden. Der Wechsel der Lager ist relativ aufwändig und mit der Gefahr einer Beschädigung von Komponenten der elektrischen Maschine verbunden. Üblicherweise muss der Rotor während des Lagerwechsels demontiert und danach wieder montiert werden. Dies ist insbesondere bei permanentmagneterregten elektrischen Maschinen aufgrund der hohen auftretenden magnetischen Kräfte im Luftspalt zwischen Rotor und Stator ein besonders schwieriges Unterfangen.

Daher gibt es Bestrebungen, elektrische Maschinen zu entwickeln, deren Lager auch ohne Demontage des Rotors bewerkstelligt werden kann.

Eine gattungsbildende elektrische Maschine ist aus der JP 2003-172458 A wie auch der DE 10 2008 064 497 A1 bekannt. Beispielsweise beschreibt die DE 10 2008 064 497 A1 eine elektrische Maschine, bei der ein Lagerwechsel sicher durchgeführt werden kann, ohne dass der Rotor mit dem Stator in Kontakt gerät. Zu diesem Zweck beinhaltet die elektrische Maschine ein so genanntes Rotorstützschild, welches einen Zentrierabschnitt besitzt, der gewährleistet, dass die Welle mit dem Lager in einer gewünschten zentrierten Position gehalten wird. Der Zentrierabschnitt sorgt also dafür, dass der Rotor nach dem Lagerwechsel bei der Montage automatisch von dem Rotorstützschild abhebt und in die gewünschte zentrierte Position gebracht wird. Dabei kommt es jedoch zu einer geringfügigen Verschiebung zwischen dem Rotor und Stator, welche jedoch in der Regel geringer ist als der Luftspalt zwischen Rotor und Stator. Durch die Verschiebung wiederum kommt es zu unterschiedlichen Kraftwirkungen auf den Rotor, welche den Lagertausch erschweren und auch zu Beschädigungen von Komponenten führen können.

Die Aufgabe der vorliegenden Erfindung besteht in der Schaffung einer elektrischen Maschine, welche einen einfacheren und rascheren Tausch der Lager ohne Rotordemontage und ohne die Gefahr einer Beschädigung von Komponenten der elektrischen Maschine zulässt. Nachteile des Standes der Technik sollen vermieden oder zumindest reduziert werden.

Gelöst wird die erfindungsgemäße Aufgabe durch eine oben genannte elektrische Maschine, bei der die Labyrinthringe zueinander in eine Feststellposition bewegbar sind, bis die Formelemente einander berühren, sodass der Rotor zum Tausch der Lager in axialer und radialer Richtung fixierbar ist. Durch die erfindungsgemäße elektrische Maschine wird eine Fixierung des Rotors während des Lagerwechsels sowohl in radialer Richtung im Wesentlichen exakt in der Mitte der Drehachse als auch in axialer Richtung erzielt. Erforderlich dafür ist ein entsprechender Reibschluss oder Formschluss der beiden Labyrinthringe. Im Falle eines bloßen Reibschlusses muss die Kraft, welche auf die beiden Labyrinthringe in der Feststellposition wirkt, größer sein als die Kräfte der Permanentmagnete. Dadurch, dass der Rotor im Wesentlichen genau in der Drehachse gehalten wird, wirken während des Lagerwechsels theoretisch keine zusätzlichen magnetischen Kräfte auf den Rotor. Erreicht wird diese Lagefixierung des Motors während des Lagerwechsels also dadurch, dass die Labyrinthdichtung derartig ausgebildet ist, dass die Labyrinthringe der Labyrinthdichtung in eine Feststellposition bewegbar sind. In dieser Feststell- bzw. Wartungsposition können die Lager der elektrischen Maschine rasch und einfach gewartet bzw. ausgetauscht werden. Gegenüber herkömmlichen elektrischen Maschinen muss ein Teil der Labyrinthdichtung, nämlich ein Labyrinthring, in axialer Richtung verschiebbar ausgebildet sein.

Vorteilhafter Weise ist der feststehende Labyrinthring zum drehenden Labyrinthring in die Feststellposition bewegbar. Bei dieser Ausführungsvariante wird also der feststehende Labyrinthring, der üblicherweise einstückig mit dem Lagerschild gebildet ist, als eigener Bauteil ausgebildet und im Normalbetrieb der elektrischen Maschine mit dem Lagerschild lösbar verbunden. Zum Zweck des Lagerwechsels wird diese Verbindung zwischen feststehendem Labyrinthring und Lagerschild gelöst, der feststehende Labyrinthring gegen den drehenden Labyrinthring bewegt und in dieser Feststellposition fixiert. Nach erfolgtem Lagerwechsel wird der feststehende Labyrinthring wieder vom drehenden Labyrinthring wegbewegt und am Lagerschild befestigt, wodurch die elektrische Maschine wieder für den Normalbetrieb bereit ist.

Gemäß einem Merkmal der Erfindung weisen die Formelemente der Labyrinthringe konisch ausgebildete Flächen auf, welche konisch ausgebildeten Flächen in der Feststellposition einander berühren. Durch eine derartige Ausbildung der Labyrinthringe kann in der Feststellposition ein Formschluss zwischen den Labyrinthringen erzielt werden, welcher eine Fixierung des Rotors exakt in der Mitte der Drehachse gewährleistet.

Der feststehende Labyrinthring ist im Normalbetrieb der elektrischen Maschine ebenfalls vorzugsweise über Schrauben mit dem Lagerschild verbunden. Zum Zwecke der Überführung des Labyrinthrings in die Feststellposition zum Lagerwechsel werden diese Schrauben gelöst.

Der feststehende Labyrinthring ist in der Feststellposition über zumindest eine Schraube, vorzugsweise drei winkelversetzt angeordnete Schrauben, fixierbar. Dadurch wird eine sichere Fixierung der Position des Motors während des Lagerwechsels bei vergleichsweise geringem Aufwand erreicht.

Wenn jedes Lager in einer Hakenbuchse angeordnet ist, kann beim Lagerwechsel die Hakenbuchse zusammen mit dem Lager einfach entfernt werden. Danach wird die Hakenbuchse üblicherweise vorgewärmt, wodurch sie sich ausdehnt und das Lager leichter entnommen und ein neues Lager eingepresst werden kann.

Die Hakenbuchse ist im Normalbetrieb der elektrischen Maschine vorzugsweise am Lagerschild fixiert. Diese Fixierung erfolgt vorzugsweise mittels lösbarer Fixierungselemente, insbesondere Schrauben.

Die Lager können durch Wälzlager (z.B. Kugellager) gebildet sein. Die Lager können sowohl als Loslager als auch als Festlager ausgebildet sein.

Vorzugsweise sind die Lager der elektrischen Maschine isoliert ausgebildet. Diese Isolierung kann durch eine Keramikbeschichtung gebildet sein.

Die Erfindung wird anhand der beigefügten Zeichnungen, welche Ausführungsbeispiele elektrischer Maschinen zeigen, näher erläutert. Darin zeigen:
- Fig. 1: ein Schnittbild durch eine permanentmagneterregte Maschine des Standes der Technik;
- Fig. 2: eine Seitenansicht auf eine erfindungsgemäße permanentmagneterregte Maschine;
- Fig. 3: ein Schnittbild durch einen Teil der elektrischen Maschine gemäß Fig. 2 im Bereich eines Lagers entlang der Schnittlinie III-III;
- Fig. 4: ein Schnittbild durch einen Teil der elektrischen Maschine gemäß Fig. 2 im Bereich eines Lagers entlang der Schnittlinie IV-IV in einer Feststellposition zum Lagertausch;
- Fig. 5: das Detail A aus Fig. 3 im Bereich der Labyrinthdichtung in vergrößerter Darstellung;
- Fig. 6: das Detail B aus Fig. 4 im Bereich der Labyrinthdichtung in vergrößerter Darstellung;
- Fig. 7: eine alternative Ausführungsform des Details A im Bereich der Labyrinthdichtung; und
- Fig. 8: die alternative Ausführungsform gemäß Fig. 7 in der Festellposition zum Lagertausch.

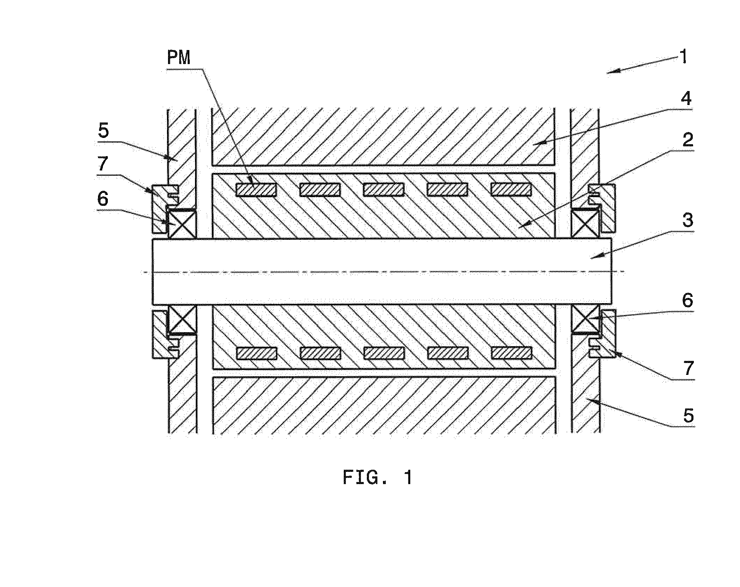

Die elektrische Maschine 1 gemäß Fig. 1 umfasst einen Stator 4 und einen gegenüber dem Stator 4 drehbar gelagerten Rotor 2 mit einer Rotorwelle 3. Im dargestellten Ausführungsbeispiel handelt es sich um eine permanentmagneterregte elektrische Maschine mit entsprechenden Permanentmagneten PM am Rotor 2. Um den Stator 4 ist ein Gehäuse angeordnet mit seitlichen Lagerschilden 5 mit darin angeordneten Lagern 6 zur drehbaren Lagerung der Rotorwelle 3. An beiden Seiten der elektrischen Maschine 1 sind entsprechende Labyrinthdichtungen 7 angeordnet, welche jeweils aus einem drehenden Labyrinthring 8 und einem feststehenden Labyrinthring 10 bestehen. Die Labyrinthringe 8, 10 umfassen entsprechende ineinandergreifende Formelemente 9, 11. Zum Wechsel bzw. der Wartung der Lager 6 muss üblicherweise die Rotorwelle 3 mit dem daran befestigten Rotor 2 aus dem Stator 4 entfernt, die Lager 6 gewechselt und danach die Rotorwelle 3 wieder in den Stator 4 eingeschoben werden. Insbesondere bei den enormen magnetischen Anziehungskräften bei permanentmagneterregten elektrischen Maschinen 1 aufgrund der Permanentmagnete PM am Rotor 2 ist die Demontage und Montage des Rotors 2 ohne Berührung des Stators 4 ohne entsprechende Hilfsmittel nicht möglich.

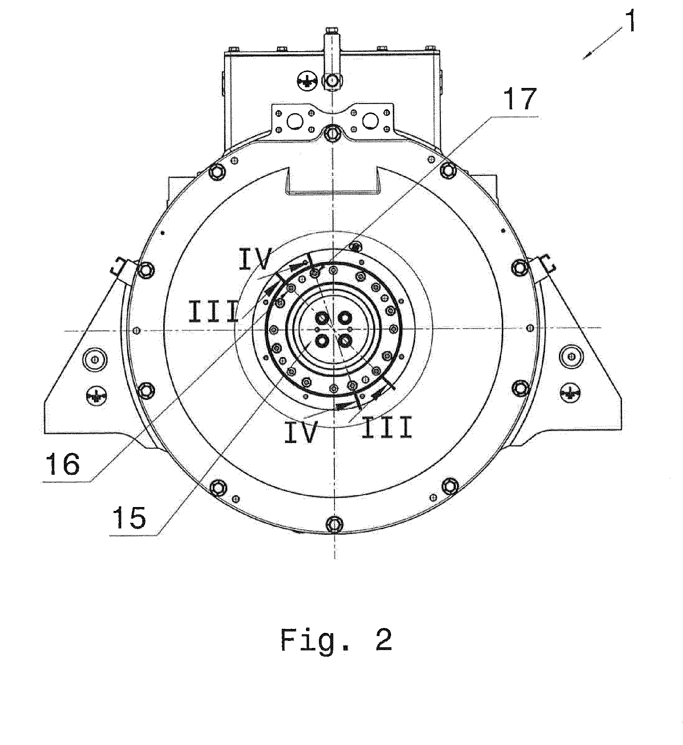

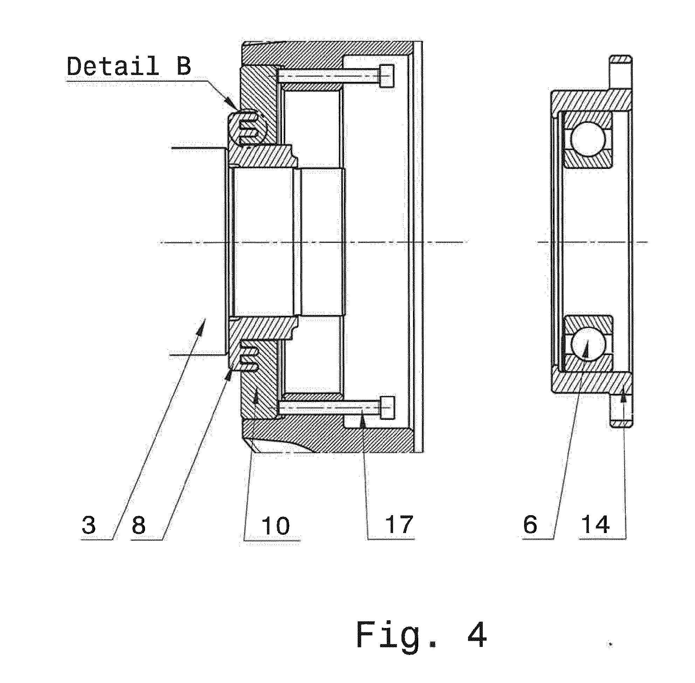

Die Fig. 2 bis 6 zeigen verschiedene Ansichten auf eine erfindungsgemäß ausgebildete elektrische Maschine 1, bei der ein Lagerwechsel ohne Demontage des Rotors 2 erfolgen kann. Erfindungsgemäß wird die Labyrinthdichtung 7 so ausgebildet, dass die Labyrinthringe 8, 10 zueinander in eine Feststellposition bewegbar sind, sodass der Rotor 2 zum Tausch der Lager 6 in axialer und radialer Richtung fixierbar ist. Die üblicherweise vorhandene Labyrinthdichtung 7 der elektrischen Maschine 1 wird also beim Wechsel der Lager 6 zum Fixieren des Rotors 2 der elektrischen Maschine 1 sowohl in axialer als auch radialer Richtung verwendet. Zu diesem Zweck muss zumindest ein Labyrinthring 8, 10 gegenüber dem anderen Labyrinthring 10, 8 der Labyrinthdichtung 7 bewegbar ausgebildet sein. Bei der dargestellten Ausführungsvariante ist der feststehende Labyrinthring 10 gegenüber dem drehenden Labyrinthring 8 in axialer Richtung bewegbar angeordnet. Im Normalbetrieb der elektrischen Maschine 1 ist der feststehende Labyrinthring 10 mit dem Lagerschild 5 über entsprechende Schrauben 16 verbunden. Beim Lagerwechsel werden nun diese Schrauben 16 gelöst und der nunmehr gelöste Labyrinthring 10 beispielsweise über Schrauben 17 gegen den drehenden Labyrinthring 8 gepresst. Dadurch wird der Rotor 2 sowohl in axialer als auch radialer Richtung fixiert und das Lager 6 kann zusammen mit der allfälligen Hakenbuchse 14 entnommen werden, wie in Fig. 4 dargestellt. Die Anordnung des Lagers 6 in einer Hakenbuchse 14 hat den Vorteil, dass die Demontage des Lagers 6 zusammen mit der Hakenbuchse 14 erleichtert wird und allenfalls unter Zuhilfenahme von Wärmeeinwirkung das Lagers 6 leichter aus der Hakenbuchse 14 entfernt werden kann. Natürlich wäre es auch möglich, das Lager 6 ohne Hakenbuchse 14 direkt an der Rotorwelle 3 anzuordnen. Nach dem Wechsel der Lager 6 wird der feststehende Labyrinthring 10 wieder vom drehenden Labyrinthring 8 wegbewegt, der feststehende Labyrinthring 10 wieder mit den entsprechenden Schrauben 16 am Lagerschild 5 befestigt, worauf die elektrische Maschine 1 wieder für den Normalbetrieb bereit ist.

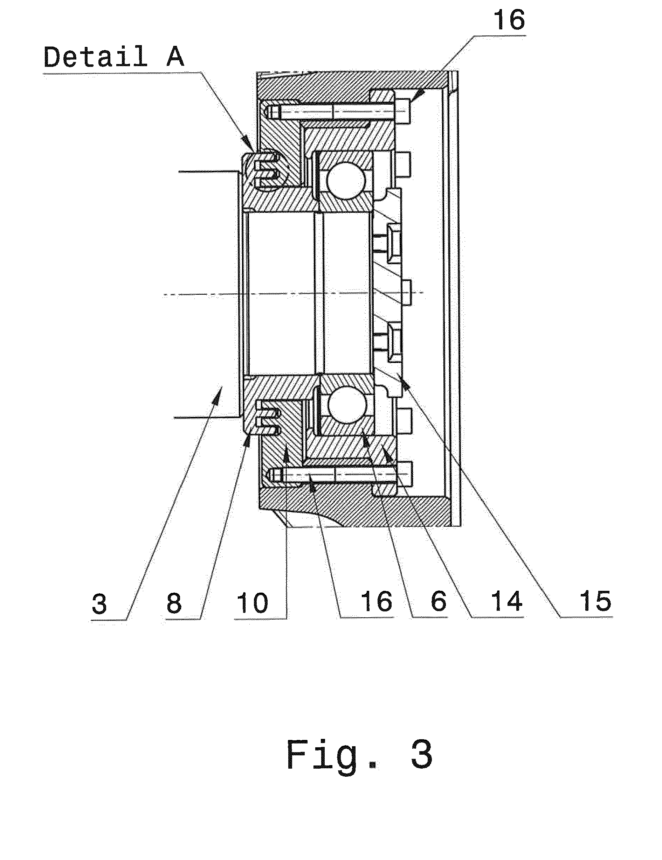

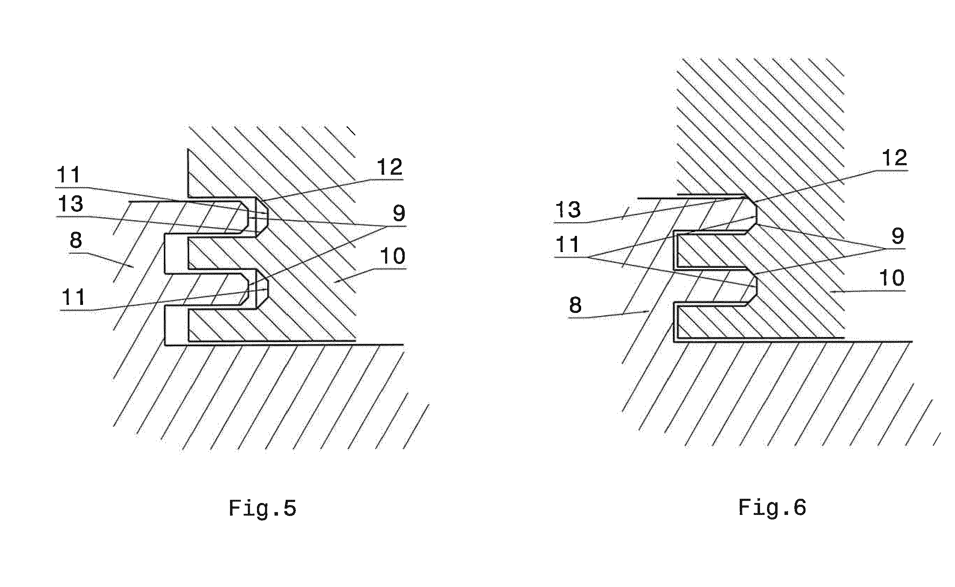

Für die Fixierung des Rotors 2 in der Feststellposition ist es erforderlich, die Labyrinthringe 8, 10 mit ausreichender Kraft zusammenzupressen, sodass eine Verschiebung des Rotors 2 gegenüber dem Stator 4 nicht mehr möglich ist. Eine Verbesserung wird jedoch dadurch erzielt, dass die beiden Labyrinthringe 8, 10 der Labyrinthdichtung 7 formschlüssig in der Feststellposition miteinander verbunden werden. Eine Möglichkeit einer Realisierung eines derartigen Formschlusses ist in den Fig. 5 und 6, welche die Details A und B der Fig. 3 und 4 in vergrößerter Darstellung zeigen, dargestellt. Bei dieser Ausführungsform sind die Formelemente 9 am drehenden Labyrinthring 8 und die Formelemente 11 am feststehenden Labyrinthring 10 mit entsprechenden konischen Flächen 12 bzw. 13 ausgebildet. Diese konischen Flächen 12, 13 berühren einander in der Feststellposition, also bei zueinander bewegten Labyrinthringen 8, 10, und bewirken somit eine Lagefixierung des Rotor 2 gegenüber dem Stator 4 in axialer und in radialer Richtung.

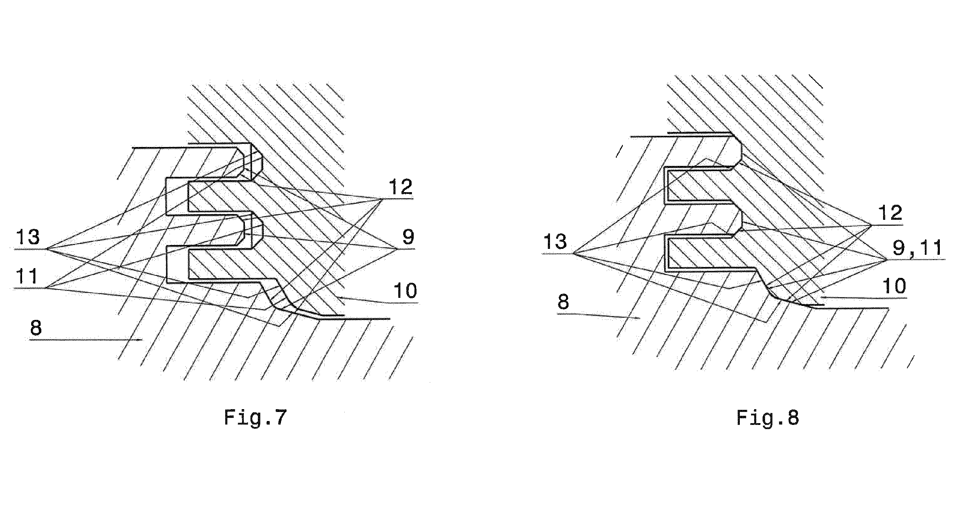

Wie in den Fig. 7 und 8 dargestellt, kann auch eine Abstufung der konischen Flächen 12, 13 an den Formelementen 9, 11 der Labyrinthringe 8, 10 mit unterschiedlichen Winkeln vorgesehen sein, wodurch eine Erleichterung bei der Montage und Demontage der Lager 6 erzielt werden kann. Durch einen flacheren Winkel der konischen Flächen der Formelemente kann der Rotor - bei einer sich unerwartet einstellenden Exzentrizität des Rotors 2 zum Stator 4 - mit geringerem Kraftaufwand zentriert werden.

Die gegenständliche elektrische Maschine 1 erlaubt einen einfachen und raschen Tausch der Lager 6 ohne Demontage des Rotors 2. Der konstruktive Mehraufwand besteht lediglich darin, dass der üblicherweise einteilig mit dem Lagerschild 5 hergestellte Labyrinthring 10 der Labyrinthdichtung 7 als eigener Bauteil ausgebildet sein muss, um die Bewegbarkeit gegenüber dem anderen Labyrinthring 8 zu gewährleisten.

## Patentansprüche

1. Elektrische Maschine (1), insbesondere permanentmagneterregte elektrische Maschine, mit einem Rotor (2) mit einer Rotorwelle (3), einem Stator (4), und seitlich angeordneten Lagerschilden (5) mit jeweils einem zwischen Rotor (2) und Stator (4) angeordneten Lager (6), wobei jeweils eine Labyrinthdichtung (7) mit jeweils einem mit dem Rotor (2) verbundenen drehenden Labyrinthring (8) mit Formelementen (9) und einem mit dem Stator (4) verbundenen feststehenden Labyrinthring (10) mit zu den Formelementen (9) des drehenden Labyrinthrings (8) korrespondierend ausgebildeten Formelementen (11) vorgesehen ist, **dadurch gekennzeichnet, dass** die Labyrinthringe (8, 10) zueinander in eine Feststellposition bewegbar sind, bis die Formelemente (9, 11) einander berühren, sodass der Rotor (2) zum Tausch der Lager (6) in axialer und radialer Richtung fixierbar ist.

2. Elektrische Maschine (1) nach Anspruch 1, **dadurch gekennzeichnet, dass** der feststehende Labyrinthring (10) zum drehenden Labyrinthring (8) in die Feststellposition bewegbar ist.

3. Elektrische Maschine (1) nach Anspruch 1 oder 2, **dadurch gekennzeichnet, dass** die Formelemente (9, 11) konisch ausgebildete Flächen (12, 13) aufweisen, welche konisch ausgebildeten Flächen (12, 13) in der Feststellposition einander berühren.

4. Elektrische Maschine (1) nach Anspruch 2 oder 3, **dadurch gekennzeichnet, dass** im Normalbetrieb der feststehende Labyrinthring (10) über Schrauben (16) mit dem Lagerschild (5) verbunden ist.

5. Elektrische Maschine (1) nach einem der Ansprüche 2 bis 4, **dadurch gekennzeichnet, dass** der feststehende Labyrinthring (10) in der Feststellposition über zumindest eine Schraube (17), vorzugsweise drei winkelversetzt angeordnete Schrauben (17), fixierbar ist.

6. Elektrische Maschine (1) nach einem der Ansprüche 1 bis 5, **dadurch gekennzeichnet, dass** jedes Lager (6) in einer Hakenbuchse (14) angeordnet ist.

7. Elektrische Maschine (1) nach Anspruch 6, **dadurch gekennzeichnet, dass** die Hakenbuchse (14) lösbar mit dem Lagerschild (5) verbunden ist.

8. Elektrische Maschine (1) nach einem der Ansprüche 1 bis 7, **dadurch gekennzeichnet, dass** jedes Lager (6) durch ein Wälzlager gebildet ist.

9. Elektrische Maschine (1) nach Anspruch 8, **dadurch gekennzeichnet, dass** jedes Lager (6) durch ein Kugellager gebildet ist.

10. Elektrische Maschine (1) nach einem der Ansprüche 1 bis 9, **dadurch gekennzeichnet, dass** die Lager (6), vorzugsweise durch eine Keramikbeschichtung, isoliert ausgebildet sind.

## Claims

1. An electrical machine (1), in particular an electrical machine excited by a permanent magnet, comprising a rotor (2) having a rotor shaft (3), a stator (4), and laterally arranged bearing shields (5) each having a bearing (6) arranged between the rotor (2) and the stator (4), in each case being provided a labyrinth seal (7) having each a rotating labyrinth ring (8) comprising form elements (9) and attached to the rotor (2), and a stationary labyrinth ring (10) attached to the stator (4) and comprising form elements (11) which are designed so as to correspond to the form elements (9) of the rotating labyrinth ring (8), **characterized in that** the labyrinth rings (8, 10) are movable towards one another into a lock position until the form elements (9, 11) contact each other, so that the rotor (2) can be fixed in the axial and radial directions for replacement of the bearings (6).

2. The electrical machine (1) according to claim 1, **characterized in that** the stationary labyrinth ring (10) is movable into the lock position towards the rotating labyrinth ring (8).

3. The electrical machine (1) according to claim 1 or 2, **characterized in that** the form elements (9, 11) have conically shaped surfaces (12, 13), which conically shaped surfaces (12, 13) contact one another in the lock position.

4. The electrical machine (1) according to claim 2 or 3, **characterized in that** during normal operation the stationary labyrinth ring (10) is connected to the bearing shield (5) by means of screws (16).

5. The electrical machine (1) according to any of claims 2 to 4, **characterized in that** the stationary labyrinth ring (10) may be fixed in the lock position by means of at least one screw (17), preferably three screws (17) arranged at different angles.

6. The electrical machine (1) according to any of claims 1 to 5, **characterized in that** each bearing (6) is arranged in a hook bushing (14).

7. The electrical machine (1) according to claim 6, **characterized in that** the hook bushing (14) is detachably connected to the bearing shield (5).

8. The electrical machine (1) according to any of claims 1 to 7, **characterized in that** each bearing (6) is formed by a roller bearing.

9. The electrical machine (1) according claim 8, **characterized in that** each bearing (6) is formed by a ball bearing.

10. The electrical machine (1) according to any of claims 1 to 9, **characterized in that** the bearings (6) are designed insulated preferably by a ceramic coating.

## Revendications

1. Machine électrique (1), en particulier machine électrique excitée par un aimant permanent, comprenant un rotor (2) pourvu d'un arbre de rotor (3), un stator (4), et des flasques (5) disposées latéralement pourvues respectivement d'un palier (6) disposé entre le rotor (2) et le stator (4), dans laquelle est prévu respectivement un joint d'étanchéité à labyrinthe (7) pourvu respectivement d'une bague à labyrinthe (8) rotative reliée au rotor (2) et dotée d'éléments moulés (9) et d'une bague à labyrinthe (10) immobile reliée au stator (4) et dotée d'éléments moulés (11) réalisés de manière à correspondre aux éléments moulés (9) de la bague à labyrinthe (8) rotative, **caractérisée en ce que** les bagues à labyrinthe (8, 10) peuvent être déplacées l'une par rapport à l'autre dans une position d'immobilisation jusqu'à ce que les éléments moulés (9, 11) soient en contact les uns avec les autres de sorte que le rotor (2) puisse être fixé pour le remplacement des paliers (6) dans la direction axiale et la direction radiale.

2. Machine électrique (1) selon la revendication 1, **caractérisée en ce que** la bague à labyrinthe (10) immobile peut être déplacée dans la position de blocage en direction de la bague à labyrinthe (8) rotative.

3. Machine électrique (1) selon la revendication 1 ou 2, **caractérisée en ce que** les éléments moulés (9, 11) présentent des surfaces (12, 13) réalisées de manière conique, lesquelles surfaces (12, 13) réalisées de manière conique viennent en contact les unes avec les autres dans la position de blocage.

4. Machine électrique (1) selon la revendication 2 ou 3, **caractérisée en ce que** la bague à labyrinthe (10) immobile est reliée, en fonctionnement normal, par l'intermédiaire de vis (16), à la flasque (5).

5. Machine électrique (1) selon l'une quelconque des revendications 2 à 4, **caractérisée en ce que** la bague à labyrinthe (10) immobile peut être fixée dans la position de blocage, par l'intermédiaire d'au moins une vis (17), de préférence trois vis (17) disposées de manière décalée selon un angle.

6. Machine électrique (1) selon l'une quelconque des revendications 1 à 5, **caractérisée en ce que** chaque palier (6) est disposé dans une douille à crochet (14).

7. Machine électrique (1) selon la revendication 6, **caractérisée en ce que** la douille à crochet (14) est reliée de manière amovible à la flasque (5).

8. Machine électrique (1) selon l'une quelconque des revendications 1 à 7, **caractérisée en ce que** chaque palier (6) est formé par un palier à roulement.

9. Machine électrique (1) selon la revendication 8, **caractérisée en ce que** chaque palier (6) est formé par un roulement à billes.

10. Machine électrique (1) selon l'une quelconque des revendications 1 à 9, **caractérisée en ce que** les paliers (6) sont réalisés de manière isolée, de préférence par un revêtement en céramique.
